# EUROPÄISCHE PATENTSCHRIFT

(11) **EP 2 174 814 B1**
(45) Veröffentlichungstag und Bekanntmachung des Hinweises auf die Patenterteilung: **12.11.2014**
(21) Anmeldenummer: 09011824.1
(22) Anmeldetag: 16.09.2009
(51) Int. Cl.: B60J 10/08, E05F 15/00

(54) **Profilleiste für eine Fahrzeugtür mit Einklemmschutz**
Moulding for a vehicle door with pinching protection
Profilé pour une porte de véhicule dotée d'une protection contre les coincements

(30) Priorität: 10.10.2008 DE 202008013508 U
(43) Veröffentlichungstag der Anmeldung: 14.04.2010
(73) Patentinhaber: GUMMI-WELZ GmbH u. Co. KG GUMMI-KUNSTSTOFFTECHNIK-SCHAUMSTOFFE, 89231 Neu-Ulm (DE); Mayser GmbH & Co. KG, D-89073 Ulm (DE)
(72) Erfinder: Grein, Horst, 34637 Schrecksbach (DE); Konradt, Peter, 34266 Niestetal (DE)
(74) Vertreter: König, Beate

(56) Entgegenhaltungen:
- EP-A1- 0 504 481
- EP-B1- 1 288 420
- CH-A5- 688 354
- DE-U1- 8 713 426

## Beschreibung

Die Erfindung betrifft eine Profilleiste für eine Fahrzeugtür mit Einklemmschutz bzw. Einklemmerkennung, umfassend eine gummielastische Profilleiste mit einem Profilfuß, zwei Außenseiten sowie einer Stirnseite und mit einem in einem Aufnahmeraum in der Profilleiste angeordneten, durch Bewegungen der Profilleiste betätigbaren elektrischen Sensor mit zwei Betätigungsseiten, wobei der Aufnahmeraum des elektrischen Sensors zumindest bereichsweise eine flexible Wandung aufweist, von der ein Bereich einer der beiden Betätigungsseiten des elektrischen Sensors gegenüberliegt, und zwei Betätigungsstege vorgesehen sind, die mit der flexiblen Wandung des Aufnahmeraums Eingriff bringbar sind.

Gummielastische Dichtungen für Türen von Nutzfahrzeugen, insbesondere für die Personenbeförderung, haben neben üblichen technischen Anforderungen Sicherheitskriterien zu erfüllen. So muss es beispielsweise gewährleistet sein, dass die Hand einer Person zwischen sich schließende Türen gelangt, ohne dass es zu einer Verletzung oder Personengefährdung kommt. Hieraus ergeben sich einerseits bestimmte notwendige Elastizitätseigenschaften wie Nachgiebigkeit der Dichtung in bestimmtem Umfang und andererseits das Erfordernis, dass die Türschließbewegung bei einem bestimmten Widerstand reversiert werden muss, d.h. dass sich die Tür notfalls wieder öffnen muss, um die eingeklemmte Hand oder dergleichen freizugeben. Auf diese Weise wird es meistens vermieden, dass es überhaupt zu einem Einklemmereignis kommt.

Die DE 87 13 426 U1 zeigt.eine Profilleiste für eine Fahrzeugtür Einklemmschutz gemäß dem Oberbegriff des Anspruchs 1.

In der EP 1 288 420 B1 ist eine Profilleiste mit Fingerschutzprofil beschrieben, bei der der elektrische Sensor in einer an der Stirnseite vorstehenden Kammer aufgenommen ist. Die Kammer ist zu beiden Seiten schwenkbeweglich ausgebildet. Das gegenüberliegende Profil hat eine an die Außenkontur der Kammer angepasst gewölbte Andruckfläche an der Stirnseite und nahe dem Profilfuß einen weiteren elektrischen Sensor. Im Fall eines Einklemmereignisses kann es bei seitlicher Druckbelastung der Profilleiste dazu kommen, dass dies relativ spät festgestellt wird, was für die betroffenen Personen nachteilig ist.

Ein elastisches Profil an der Schließkante beispielsweise einer Fahrzeugtür, etwa einer Schwenktür, Schiebetür etc. gemäß DE 32 32 365 A1 fasst zwei elektrische Sensoren in jeweils einem Kunststoffprofil mit halbkreisförmigem Querschnitt. Von dem bogenförmigen Bereich aus erstreckt sich eine Rippe, die bei Druckbeaufschlagung des Kunststoffprofils zur Anlage an den Sensor gelangt und diesen betätigt. Da sich die Sensoren nahe dem Profilfuß befinden, besteht die Möglichkeit, dass seitliche Klemmkräfte oder kleinere Hindernisse erst sehr spät festgestellt werden.

Bei einer Fingerschutzleiste gemäß EP 1 561 623 A2 ist in einer beweglichen, sich von der Profilleiste fort erstreckenden Dichtlippe oder in deren Fuß- oder Anlagebereich ein elektrischer Sensor angeordnet. Die Verschwenkung der Dichtlippe führt zu einer Kraftbeaufschlagung des elektrischen Sensors. Durch die Lage nahe der Stirnseite der Profilleiste ist eine Beschädigung des elektrischen Sensors durch Vandalismus unter Umständen möglich.

Der Erfindung liegt die Aufgabe zugrunde, eine Profilleiste für eine Fahrzeugtür zu schaffen, die für Einklemmvorgänge empfindlich und langlebig ist.

Diese Aufgabe ist durch die Erfindung bei einer Profilleiste mit den Merkmalen des Anspruchs 1 gelöst. Vorteilhafte Weiterbildungen der erfindungsgemäßen Profilleiste sind Gegenstand der Unteransprüche.

Eine Profilleiste gemäß der Erfindung umfasst somit eine gummielastische Profilleiste mit einem Profilfuß, zwei Außenseiten sowie einer Stirnseite und mit einem in einem Aufnahmeraum in der Profilleiste angeordneten, durch Bewegungen der Profilleiste betätigbaren elektrischen Sensor mit zwei Betätigungsseiten. Dabei weist der Aufnahmeraum des elektrischen Sensors zumindest bereichsweise eine flexible Wandung auf, von der ein Bereich einer der beiden Betätigungsseiten des elektrischen Sensors gegenüberliegt. Es sind zwei Betätigungsstege vorgesehen, die mit der flexiblen Wandung des Aufnahmeraums in Eingriff bringbar sind. Ein flexibler Bereich der flexiblen Wand des Aufnahmeraums liegt jeweils einer der Betätigungsseiten des Sensors gegenüber. Ein in Bezug auf den Aufnahmeraum des elektrischen Sensors seitlich und/oder zur Stirnseite hin liegender, bei Druckbeaufschlagung von außen zumindest teilweise seitlich auslenkbarer und/oder verformbarer Bereich im Inneren der Profilleiste umfasst zwei relativ starre, in Bezug aufeinander beabstandete und bewegliche Betätigungsstege, die jeweils mit einer Betätigungsseite des elektrischen Sensors in Betätigungseingriff bringbar sind.

Vorteilhaft erfolgt im Fall eines Einklemmens eines Arms, eines Fingers, etc. oder auch im Fall einer eher seitlichen Kraftausübung auf das Profilende, sei es von innen oder von außen, eine rasche Auslösung des elektrischen Sensors. Das entsprechende Nachgeben des Profils bei Krafteinwirkung führt zu einer Auslenkung des betreffenden Betätigungsstegs, so dass dessen vorderes Ende wiederum eine Kraft senkrecht auf den elektrischen Sensor ausübt und diesen auslöst.

Die Schaltauslösung durch die im Inneren der Profilleiste in diese eingeformten Betätigungsstege bzw. -arme ist hochemp-findlich. Bei nur leichtem Druck auf die Profilleiste, sei es direkt oder schräg von vorne oder seitlich im vorderen Bereich, wird die Kraft ins Innere der Profilleiste übertragen und bewirkt dort eine Verlagerung bzw. Verformung von Profilmaterial. Der jeweilige dort vorgesehene Betätigungssteg, der einen Wandabschnitt darstellt, wird hierdurch hebelartig ausgelenkt, wobei sich sein vorderes Ende zum elektrischen Sensor hin bewegt und diesen betätigt. Infolge des sich ergebenden relativ langen Hebelarms reichen bereits kleine Kräfte aus, um den elektrische Sensor zu betätigen, bei dem es sich um ein Schaltelement wie ein elektrischer Sensor handeln kann.

Bei einer bevorzugten Ausführungsform der Erfindung bildet mindestens ein Betätigungssteg einen Teil der Wandung des Aufnahmeraums des elektrischen Sensors. Damit wird die Auslenkkraft des Betätigungsstegs direkt auf den elektrischen Sensor übertragen. Es kann auch vorgesehen sein, dass ein Betätigungssteg in die Wandung des Aufnahmeraums des elektrischen Sensors übergeht, d.h. nur teilweise die Wandung bildet. Auch in diesem Fall ergibt sich eine direkte Kraftübertragung.

Die flexible Wandung des Aufnahmeraums des elektrischen Sensors kann auf einer, vorzugsweise der der Stirnseite gegenüberliegenden Seite, mindestens eine Betätigungsrippe in Höhe des Endes des zugehörigen Betätigungsstegs aufweisen. Außerdem können auch auf beiden Seiten der Aufnahmeraumwandung Betätigungsrippen vorgesehen sein. Die Betätigungsrippen stellen einen sicheren Halt des elektrischen Sensors im Aufnahmeraum sicher und unterstützen die Kraftübertragung von dem betreffenden Betätigungssteg auf den elektrischen Sensor.

Bei einer bevorzugten Ausführungsform der Erfindung weist die flexible Wandung des Aufnahmeraums des elektrischen Sensors auf einer, vorzugsweise der der Stirnseite zugewandten Seite, mindestens eine Betätigungsrippe in Höhe des Endes des zugehörigen Betätigungsstegs auf.

Es kann zweckmäßig ein Betätigungssteg am Ende einen Betätigungsvorsprung aufweisen, der der flexiblen Wandung des Aufnahmeraums des elektrischen Sensors gegenüberliegt. Außerdem kann dann das Ende eines Betätigungsstegs einen geringen Abstand von der flexiblen Wandung des Aufnahmeraums des elektrischen Sensors aufweisen. Vorzugsweise ist zwischen dem Ende des Betätigungsstegs und der flexiblen Wandung des Aufnahmeraums des elektrischen Sensors ein Hohlraum der Profilleiste vorgesehen. Es könnte stattdessen auch ein Bereich mit geringerer Festigkeit bzw. höherer Nachgiebigkeit vorgesehen sein. Infolge des Abstands ergibt sich eine hebelartige Kraftbeaufschlagung des elektrischen Sensors im Fall eines Einklemmergebnisses.

Bei einer Ausführungsform der Erfindung ist ein Betätigungssteg zu einem Betätigungsende verjüngt. Dadurch kann der Betätigungspunkt genau festgelegt werden.

Ein Betätigungssteg kann bei einer anderen Ausführungsform der Erfindung entlang der Stirnseite der Profilleiste verlaufen und der andere Betätigungssteg auf der dem elektrischen Sensor gegenüberliegenden Seite durch einen Hohlraum der Profilleiste begrenzt sein.

Gemäß der Erfindung kann eine sich von der Stirnseite fort erstreckende, in zwei Richtungen bewegliche Lippe vorgesehen sein, deren Fuß sich in die Stirnseite erweitert und im Anschluss an den erweiterten Bereich in die beiden Betätigungsstege übergeht. Die Betätigungslippe wird im Fall des Einklemmens durch den Finger, Arm, etc. ausgelenkt und übt damit je nach Auslenkrichtung eine Betätigungskraft auf einen der beiden Betätigungsstege aus. Wenn die Profilleiste an der Stirnseite außen seitlich jeweils eine Dichtlippe aufweist, ist die Betätigungslippe von außen, d.h. bei geschlossener Tür, nicht sichtbar und dadurch die Gefahr von Beschädigungen durch Vandalismus herabgesetzt. Die Dichtlippen stehen vorteilhaft von der Außenseite schräg nach vorne und innen ab.

Dadurch, dass der elektrische Sensor mit minimalem Spiel eingebaut ist, lässt sich eine besonders effektive Auslösung derselben erreichen, da sich der Schaltpunkt genau örtlich festlegen lässt.

Bei einer Ausführungsform der Erfindung erstreckt sich die bewegliche Lippe von der Stirnseite der Profilleiste von dieser fort schräg in Richtung einer Außenseite der Profilleiste, wobei an dem dem vorderen Lippenende entgegengesetzten Ende eine Aussparung in der Stirnseite vorgesehen ist. Dies erlaubt die Verwendung nur eines Profils für zwei einander gegenüberliegende Profilleisten. Der Fertigungs- und Lageraufwand sind dadurch herabgesetzt.

Die gummielastische Profilleiste kann zwecks Redundanz zusätzlich mit mindestens einer luftdicht abgeschlossenen Hohlkammer ausgebildet sein, deren Volumen sich bei Druckbeaufschlagung von außen ändert, und an die ein Druckschalter angeschlossen ist, der eine sich aus der Volumenänderung ergebende Druckdifferenz in ein Ausgangssignal umwandelt.

Die Erfindung wird im folgenden weiter anhand von Ausführungsbeispielen und der Zeichnung beschrieben. Diese Darstellung dient lediglich zur Veranschaulichungszwecken und soll die Erfindung nicht auf die konkret angegebenen Merkmalskombinationen einschränken. Es zeigen
- Fig. 1: eine schematische Schnittansicht eines ersten Ausführungsbeispiels einer erfindungsgemäßen Profilleiste,
- Fig. 2: eine schematische Schnittansicht von zwei zusammenwirkenden Profilleisten gemäß Fig. 1 in Schließstellung,
- Fig. 3: eine schematische Schnittansicht eines zweiten Ausführungsbeispiels einer erfindungsgemäßen Profilleiste und
- Fig. 4: eine schematische Schnittansicht eines dritten Aus- führungsbeispiels einer erfindungsgemäßen Profilleis- te.

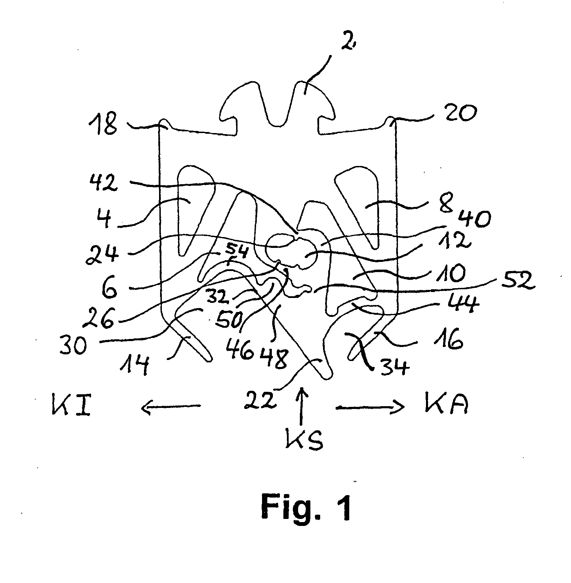

Im folgenden wird anhand von Fig. 1 der Aufbau eines ersten Ausführungsbeispiels der erfindungsgemäßen Profilleiste beschrieben. Sie besteht aus gummielastischem Material und ist mittels eines Profilfußes 2 in zugehörigen Ausnehmungen und Halterungsvorsprüngen eines Türprofils befestigbar. Die Profilleiste weist mehrere Hohlkammern 4 bis 12 auf, die durch Materialstege getrennt sind. An der dem Profilfuß 2 gegenüberliegenden Stirnseite befindet sich jeweils seitlich eine Dichtlippe 14, 16, die von der Außenseite schräg nach vorne und innen absteht. Am rückwärtigen Ende sind zwei seitliche Anlagenasen 18, 20 angeformt. Von der Stirnseite erstreckt sich eine in zwei Richtungen bewegliche Lippe 22 fort, deren Fuß sich in die Stirnseite erweitert, wobei der stirnseitige Wandungsverlauf der beweglichen Lippe 22 auf der der Dichtlippe 14 zugewandten Seite geradlinig ist und geradlinig fortgesetzt ist, siehe Bezugszeichen 32. Die Stirnseite der Profilleiste ist unter Bildung eines auf der anderen Seite durch die Dichtlippe 14 begrenzten Raums 30 in diesem Bereich zurückgesetzt. Auf der der Dichtlippe 16 zugewandten Seite setzt sich die Dichtlippe 22 in einer gebogenen, leicht zurückgesetzten Stirnseitenkontur fort, aus der sich ein Raum 34 ergibt.

Die Hohlkammern 4 bis 12 bewirken eine Gewichtsreduzierung der Profilleiste. Die annähernd zentral angeordnete Hohlkammer 12 dient als Aufnahmeraum für einen nicht dargestellten elektrischen Sensor mit zwei Betätigungsseiten. Ihre Wandung ist zumindest bereichsweise flexibel, so dass sie im Falle einer Krafteinwirkung sich deformieren und auf die betreffende Betätigungsseite des Sensors drücken kann. Daraufhin wird ein Schaltsignal ausgelöst und die Tür öffnet sich wieder. Auf der Stirnseite der Profilleiste bzw. der beweglichen Lippe 22 gegenüberliegenden Seite weist die dort flexible Wandung der Hohlkammer 12 eine Betätigungsrippe 24 auf. Die flexible Wandung der Hohlkammer 12 weist des weiteren auf der der beweglichen Lippe zugewandten Seite zwei Betätigungsrippen 26 auf. Mit diesen Betätigungsrippen wird einerseits der elektrische Sensor in seiner Lage fixiert, andererseits ermöglichen sie einen direkten Kontakt bzw. im Falle eines Einklemmereignisses eine unmittelbare Druckübertragung auf den Sensor.

Die Hohlkammer 10, die längliche Gestalt hat, umgibt die Hohlkammer 12 teilweise, so das sich ein im wesentlichen gebogener Betätigungssteg 40 ergibt. Dieser verjüngt sich zu einem Betätigungsende 42 nahe der Betätigungsrippe 24. Am anderen Ende geht der Betätigungssteg 40 in den erweiterten Fußbereich der beweglichen Lippe 22 über. An dem stirnseitigen Ende ist die Hohlkammer 10 durch einen schmalen Stegabschnitt 44 begrenzt, der in den erweiterten Fußbereich der beweglichen Lippe 22 übergeht. Bis zum gebogenen Bereich des Betätigungsstegs 40 weist die Hohlkammer 10 auf dessen Seite eine im wesentlichen gerade verlaufende Wandung auf.

Die Gestalt der Hohlkammer 6 ist derart, dass sie zur Mitte der Profilleiste hin nur geringe Breite hat und zwischen ihr und der Hohlkammer 12 ein schmaler Stegabschnitt 46 gebildet ist. Im Bereich des Stegabschnitts 46 liegen auch die Betätigungsrippen 26 der Hohlkammer 12. Auf der der Hohlkammer 12 gegenüberliegenden Seite der Hohlkammer 6 befindet sich ein sich von dem erweiterten Fußbereich der beweglichen Lippe 22 aus erstreckender Betätigungssteg 48, der an seinem der Hohlkammer zugewandten Ende einen Betätigungsvorsprung 50 aufweist. Der Betätigungsvorsprung 50 liegt gegenüber dem flexiblen Wandungsbereich der Hohlkammer 12. Die Hohlkammer 6 erstreckt sich in Richtung der Hohlkammer 10 soweit, dass zwischen ihr und dem gegenüberliegenden geraden Wandungsabschnitt der Hohlkammer 10 eine Stegverengung 52 gebildet ist, die als Scharnier wirkt. Profilfußseitig umschließen der gebogene Bereich des Betätigungsstegs 40 und der Stegabschnitt 46 die Hohlkammer 12 gabelförmig. Die Hohlkammer 6 ist durch einen schmalen Stegabschnitt 54 zur Stirnseite der Profilleiste abgeschlossen.

Im folgenden wird die Schaltfunktion der erfindungsgemäßen Profilleiste beschrieben. Wenn im Fall eines Einklemmens beim Schließen der Tür eine Kraft mit einer Komponente nach außen (siehe Pfeil KA) ausgeübt wird, wird auf die bewegliche Lippe eine Kraft mit den Komponenten KA, KS ausgeübt und damit die bewegliche Lippe in Richtung der Kraftkomponente KA umgebogen. Es kommt abhängig von der Stärke der ausgeübten Kraft zu einer mehr oder weniger starken Verformung derart, dass der Betätigungssteg 40 um seinen am Betätigungsende 42 liegenden Drehpunkt geschwenkt wird. Aufgrund des relativ langen Hebelarms reichen geringe Kräfte hierzu aus, und den elektrischen Sensor wird dann über die Betätigungsrippe 24 betätigt. Zusätzlich kann bei Auftreten einer sehr starken Kraft auch direkt über die Komponente KS der Betätigungsvorsprung 50 gegen den die flexible Wandung der Hohlkammer 12 bildenden Stegabschnitt 46 gedrückt und dann auf diesem Wege den Sensor geschlossen werden, und die Tür wird reversiert oder geöffnet.

Wird eine entgegengesetzte Kraft mit einer Komponente nach innen (siehe Pfeil KI) ausgeübt, wird die bewegliche Lippe 22 in Richtung der Dichtungslippe 14 gedrückt und es kommt zu einer Überbrückung des schmalen Bereichs der Hohlkammer 6 durch Betätigungsvorsprung 50, der dann auf die flexible Wandung bzw. den Stegabschnitt 46 drückt, so dass der elektrische Sensor betätigt und die Tür reversiert oder geöffnet wird.

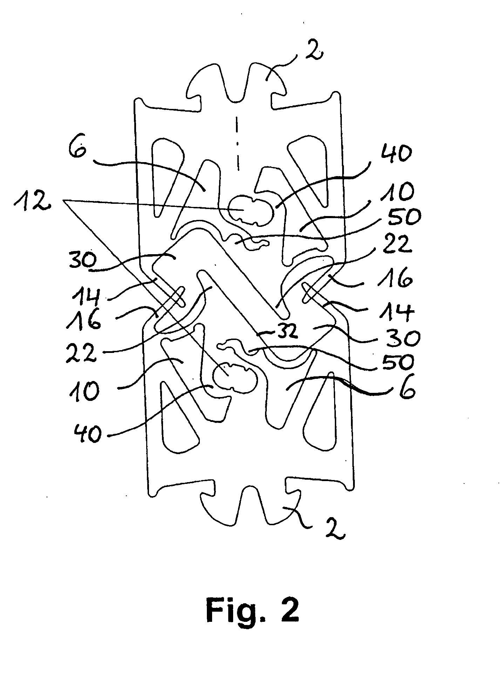

Fig. 2 zeigt das Zusammenwirken von zwei gemäß Fig. 1 ausgeführten Profilleisten, die im Schließzustand dargestellt sind. Es ergibt sich aus den beiden Räumen 30, den beiden gegenüberliegenden geradlinig verlaufenden Stirnseitenbereichen (siehe Bezugszeichen 32) im Anschluss an die bewegliche Lippe 22 und den Betätigungssteg 48 sowie den beiden Räumen 34 ein labyrinthartiger Kanal, der es abhängig von den Gegebenheiten wie Abmessungen und Kräften ermöglicht, dort hineingelangte, sehr schmale Gegenstände, etwa Krawatten und Hundeleinen, noch herauszuziehen bzw. zu erkennen, was zu einer Signalabgabe an die Türsteuerung führt. führt.

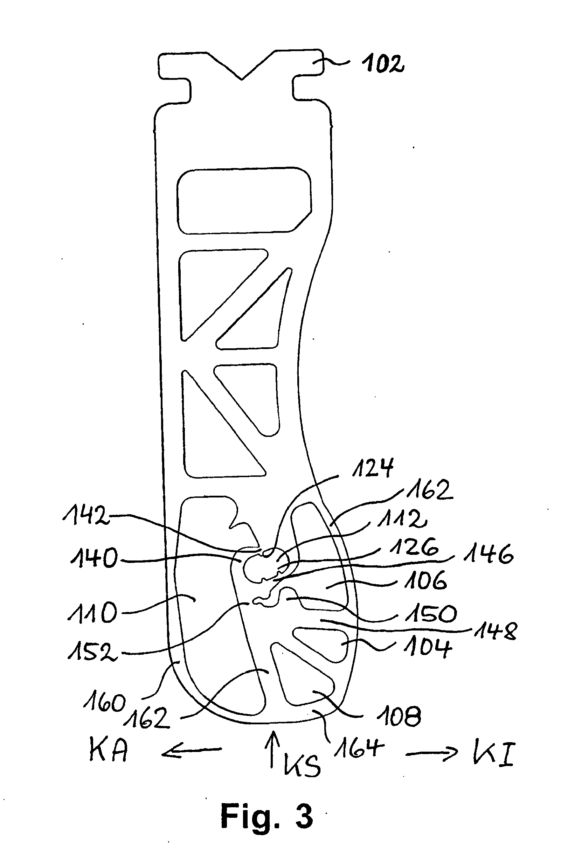

Es wird im folgenden anhand von Fig. 3 ein zweites Ausführungsbeispiel der erfindungsgemäßen Profilleiste erläutert. Soweit Teile identisch oder ähnlich denen des ersten Ausführungsbeispiels sind, werden sie und ihre Funktion nur kurz beschrieben und im übrigen auf die obenstehende Beschreibung Bezug genommen.

Die in Fig. 3 dargestellte Profilleiste besteht aus gummielastischem Material und ist mittels eines Profilfußes 102 in zugehörigen Ausnehmungen und Halterungsvorsprüngen eines Türprofils befestigbar. Die Profilleiste hat langgestreckte Gestalt und weist im fußnahen und mittleren Teil mehrere Hohlkammern auf, die nicht bezeichnet sind, sowie im stirnseitennäheren Bereich mehrere Hohlkammern 104 bis 112 auf, die durch Materialstege getrennt sind.

Die Hohlkammern 104 bis 112 bewirken eine Gewichtsreduzierung der Profilleiste. Die annähernd zentral angeordnete Hohlkammer 112, die eine zumindest bereichsweise flexible Wandung hat, dient als Aufnahmeraum für einen nicht dargestellten elektrischen Sensor mit zwei Betätigungsseiten. Auf der der Stirnseite der Profilleiste gegenüberliegenden Seite weist die flexible Wandung der Hohlkammer 112 eine Betätigungsrippe 124 auf und des weiteren weist sie auf der der Stirnseite zugewandten Seite zwei Betätigungsrippen 126 auf, die zur Lagefixierung und gezielten Auslösung des Sensors dienen.

Die Hohlkammer 110, die längliche Gestalt hat, umgibt die Hohlkammer 112 teilweise, so das sich ein im wesentlichen gebogener Betätigungssteg 140 ergibt. Dieser verjüngt sich zu einem Betätigungsende 142 nahe der Betätigungsrippe 124. Bis zum gebogenen Bereich des Betätigungsstegs 140 weist die Hohlkammer 110 auf dessen Seite eine im wesentlichen gerade verlaufende Wandung auf und wird im stirnseitigen Bereich durch einen Stegabschnitt 162 begrenzt.

Die Gestalt der Hohlkammer 106 ist derart, dass sie zur Mitte der Profilleiste hin nur geringe Breite hat und zwischen ihr und der Hohlkammer 112 ein schmaler Stegabschnitt 146 gebildet ist. Im Bereich des Stegabschnitts 146 liegen auch die Betätigungsrippen 126 der Hohlkammer 112. Auf der der Hohlkammer 112 gegenüberliegenden Seite der Hohlkammer 106 befindet sich ein im wesentlichen quer zur Profilachse verlaufender Betätigungssteg 148, der an seinem der Hohlkammer 106 zugewandten Ende einen Betätigungsvorsprung 150 aufweist. Der Betätigungsvorsprung 150 liegt gegenüber dem flexiblen Wandungsbereich der Hohlkammer 112. Die Hohlkammer 106 erstreckt sich in Richtung der Hohlkammer 110 soweit, dass zwischen den beiden Hohlkammern eine Stegverengung 152 gebildet ist. Der gebogene Bereich des Betätigungsstegs 140 und der Stegabschnitt 146 umschließen die Hohlkammer 112 gabelförmig. Auf ihren jeweiligen Außenseiten sind die Hohlkammern 106, 110 durch schmale Außenstege 160, 162 abgeschlossen. Die weiteren Außenstege 164 im stirnseitigen Bereich sind ebenfalls dünner als im mittleren und fußseitigen Bereich der Profilleiste.

Die Schaltfunktion des zweiten Ausführungsbeispiels entspricht im wesentlichen der des oben beschriebenen ersten Ausführungsbeispiels. Wenn im Fall eines Einklemmens beim Schließen der Tür eine Kraft auf den stirnseitigen bzw. den vorderen Bereich der Profilleiste mit den Komponenten KA, KS ausgeübt wird, kommt es abhängig von der Stärke der ausgeübten Kraft zu einer mehr oder weniger starken Verformung des Außenstegs 160 und Verschwenkung des Stegabschnitts 162 und damit des Betätigungshebels 140 um dessen am Betätigungsende 142 liegenden Drehpunkt. Hierzu reichen aufgrund des relativ langen Hebelarms geringe Kräfte aus, um den elektrischen Sensor zu betätigen. Zusätzlich kann bei Auftreten einer sehr starken Kraft auch direkt über die Komponente KS der Betätigungsvorsprung 150 gegen den Stegabschnitt 146 gedrückt und dann auf diesem Wege der Sensor geschlossen werden.

Wird eine entgegengesetzte Kraft mit einer Komponente nach innen (siehe Pfeil KI) auf den stirnseitigen Endbereich der Profilleiste ausgeübt, kommt es zu einer Verschwenkung des Betätigungsstegs 148 um den bei 152 liegenden Drehpunkt und dann einer Betätigung des Sensors über den Betätigungsvorsprung 150 und den Stegabschnitt 146.

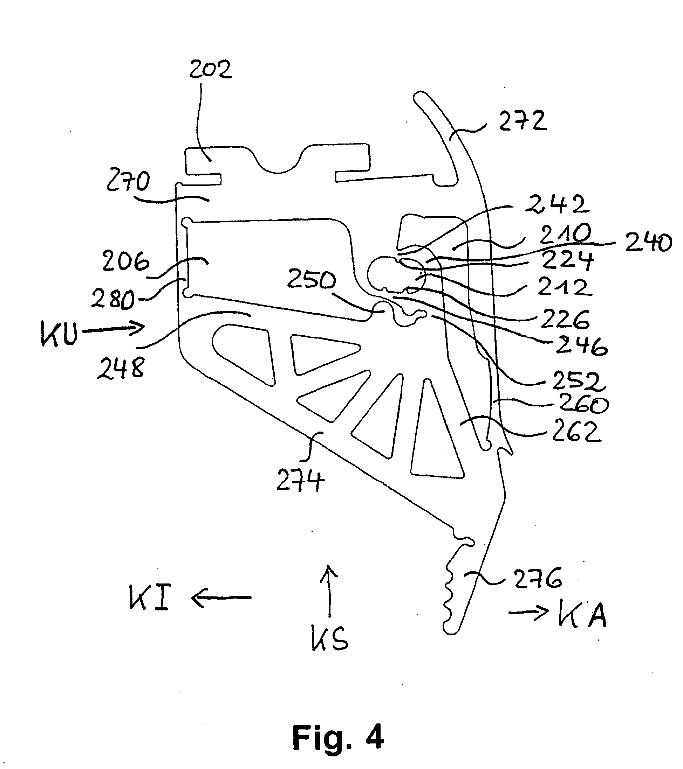

Im folgenden wird ein drittes Ausführungsbeispiel der Erfindung anhand von Fig. 4 beschrieben. Die dargestellte Profilleiste besteht aus gummielastischem Material und ist am Montageende mit einem Profilfuß 202, einer Fußleiste 270 und einer Außenlippe 272 versehen. An der Stirnseite verläuft ein Steg 274 nach vorne und schräg von innen nach außen. Eine flügelartige Dichtlippe 276 ist am Außenende des stirnseitigen Stegs 274 scharnierartig angelenkt. Die Profilleiste weist im stirnseitigen Teil mehrere Hohlkammern (ohne Bezugszeichen) sowie im mittleren Bereich Hohlkammern 206, 210 und 212 auf, die durch Materialstege getrennt sind.

Die annähernd zentral angeordnete Hohlkammer 212, die eine zumindest bereichsweise flexible Wandung hat, dient als Aufnahmeraum für einen nicht dargestellten elektrischen Sensor mit zwei Betätigungsseiten. Auf der der Stirnseite der Profilleiste gegenüberliegenden Seite weist die flexible Wandung der Hohlkammer 212 eine Betätigungsrippe 224 auf und des weiteren weist sie auf der der Stirnseite zugewandten Seite zwei Betätigungsrippen 226 auf, die zur Lagefixierung und gezielten Auslösung des Sensors dienen.

Die Hohlkammer 210, die längliche Gestalt hat, umgibt die Hohlkammer 212 teilweise, so das sich ein im wesentlichen gebogener Betätigungssteg 240 ergibt. Dieser verjüngt sich zu einem Betätigungsende 242 nahe der Betätigungsrippe 224. Bis zum gebogenen Bereich des Betätigungsstegs 240 weist die Hohlkammer 210 auf dessen Seite eine im wesentlichen gerade verlaufende Wandung auf und ist am stirnseitigen Ende nach außen durch einen dünnwandigen Stegabschnitt 260 begrenzt, gegenüberliegend durch einen Stegabschnitt 262.

Die Gestalt der Hohlkammer 206 ist derart, dass sie zur Mitte der Profilleiste hin nur geringe Breite hat und zwischen ihr und der Hohlkammer 212 ein schmaler Stegabschnitt 246 gebildet ist. Im Bereich des Stegabschnitts 246 liegen auch die Betätigungsrippen 226 der Hohlkammer 212. Auf ihrer Außenseite ist die Hohlkammer 206 durch einen schmalen Außensteg 280 abgeschlossen. Stirnseitig ist die Hohlkammer 206 durch einen querverlaufenden Betätigungssteg 248 begrenzt, der an seinem innenliegenden Ende in Höhe der Hohlkammer einen Betätigungsvorsprung 250 aufweist. Die Hohlkammer 206 erstreckt sich in Richtung der Hohlkammer 210 soweit, dass zwischen den beiden Hohlkammern eine Stegverengung 252 gebildet ist. Der gebogene Bereich des Betätigungsstegs 240 und der Stebabschnitt 246 umschließen die Hohlkammer 112 gabelförmig. Die weiteren Außenstege im stirnseitigen und fußseitigen Bereich der Profilleiste sind dicker.

Die Schaltfunktion des dritten Ausführungsbeispiels entspricht im wesentlichen der des oben beschriebenen ersten und zweiten Ausführungsbeispiels. Wenn im Fall eines Einklemmens beim Schließen der Tür eine Kraft auf den stirnseitigen bzw. den vorderen Bereich der Profilleiste mit den Komponenten KI, KS ausgeübt wird, kommt es zu einer Verschwenkung des Betätigungsstegs 248 um den bei 252 liegenden Drehpunkt und dann einer Betätigung des Sensors über den Betätigungsvorsprung 250 und den Stegabschnitt 246. Wird eine entgegengesetzte Kraft mit einer Komponente nach außen (siehe Pfeile KU, KA) auf den stirnseitigen Endbereich der Profilleiste ausgeübt, erfolgt eine Verschwenkung des Stegabschnitts 262 und damit des Betätigungshebels 240 um dessen am Betätigungsende 242 liegenden Drehpunkt. Hierzu reichen aufgrund des relativ langen Hebelarms geringe Kräfte aus, um den elektrischen Sensor zu betätigen. Zusätzlich kann bei Auftreten einer sehr starken Kraft direkt über die Komponente KS der Betätigungsvorsprung 250 gegen den Stegabschnitt 246 gedrückt und dann auf diesem Wege der Sensor betätigt bzw. geschaltet werden.

## Patentansprüche

1. Profilleiste für eine Fahrzeugtür mit Einklemmschutz, umfassend eine gummielastische Profilleiste mit einem Profilfuß (2; 102; 202), zwei Außenseiten sowie einer Stirnseite und mit einem in einem Aufnahmeraum (12; 112; 212) in der Profilleiste angeordneten, durch Bewegungen der Profilleiste betätigbaren elektrischen Sensor mit zwei Betätigungsseiten, wobei der Aufnahmeraum (12; 112; 212) des elektrischen Sensors zumindest bereichsweise eine flexible Wandung aufweist, von der ein Bereich einer der beiden Betätigungsseiten des elektrischen Sensors gegenüberliegt, und zwei Betätigungsstege vorgesehen sind, die mit der flexiblen Wandung des Aufnahmeraums in Eingriff bringbar sind, **dadurch gekennzeichnet, dass** ein flexibler Bereich der flexiblen Wandung des Aufnahmeraums jeweils einer der Betätigungsseiten des Sensors gegenüberliegt und ein in bezug auf den Aufnahmeraum (12; 112; 212) des elektrischen Sensors seitlich und/oder zur Stirnseite hin liegender, bei Druckbeaufschlagung von außen zumindest teilweise seitlich auslenkbarer und/oder verformbarer Bereich im Inneren der Profileiste zwei relativ starre, in bezug aufeinander beabstandete und bewegliche Betätigungsstege (40, 48; 140, 148; 240, 248) umfasst, die jeweils mit einer Betätigungsseite des elektrischen Sensors in Betätigungseingriff bringbar sind.

2. Profilleiste nach Anspruch 1, **dadurch gekennzeichnet, dass** die flexible Wandung des Aufnahmeraums (12; 112; 212) des elektrischen Sensors auf einer, vorzugsweise der der Stirnseite gegenüberliegenden Seite mindestens eine Betätigungsrippe (24; 124; 224) in Höhe des Endes (42; 142; 242) des zugehörigen Betätigungsstegs (40; 140; 240) aufweist.

3. Profilleiste nach Anspruch 1, **dadurch gekennzeichnet, dass** die flexible Wandung des Aufnahmeraums (12; 112; 212) des elektrischen Sensors auf einer, vorzugsweise der der Stirnseite zugewandten Seite mindestens eine Betätigungsrippe (26, 126; 226) in Höhe des Endes des zugehörigen Betätigungsstegs (48; 148; 248) aufweist.

4. Profilleiste nach Anspruch 2 oder 3, **dadurch gekennzeichnet, dass** ein Betätigungssteg (48; 148; 248) am Ende einen Betätigungsvorsprung (50; 150; 250) aufweist, der der flexiblen Wandung des Aufnahmeraums (12; 112; 212) des elektrischen Sensors gegenüberliegt.

5. Profilleiste nach einem der Ansprüche 2 bis 4, **dadurch gekennzeichnet, dass** das Ende eines Betätigungsstegs (48; 148; 248) einen geringen Abstand von der flexiblen Wandung des Aufnahmeraums (12; 112; 212) des elektrischen Sensors aufweist.

6. Profilleiste nach Anspruch 5, **dadurch gekennzeichnet, dass** zwischen dem Ende des Betätigungsstegs (48; 148; 248) und der flexiblen Wandung des Aufnahmeraums (12; 112; 212) des elektrischen Sensors ein Hohlraum (6; 106; 206) der Profilleiste vorgesehen ist.

7. Profilleiste nach einem der Ansprüche 2 bis 6, **dadurch gekennzeichnet, dass** ein Betätigungssteg (40; 140; 240) zu einem Betätigungsende verjüngt ist.

8. Profilleiste nach einem der Ansprüche 1 bis 7, **dadurch gekennzeichnet, dass** mindestens ein Betätigungssteg (40; 140; 240) einen Teil der Wandung des Aufnahmeraums (12; 112; 212) des elektrischen Sensors bildet.

9. Profilleiste nach einem der Ansprüche 3 bis 8, **dadurch gekennzeichnet, dass** ein Betätigungssteg (40; 140; 240) in die Wandung des Aufnahmeraums (12; 112; 212) des elektrischen Sensors übergeht.

10. Profilleiste nach einem der Ansprüche 3 bis 9, **dadurch gekennzeichnet, dass** ein Betätigungssteg (40) entlang der Stirnseite der Profilleiste verläuft und der andere Betätigungssteg (48) auf der dem elektrischen Sensor gegenüberliegenden Seite durch einen Hohlraum (6) der Profilleiste begrenzt ist.

11. Profilleiste nach einem der Ansprüche 1 bis 10, **dadurch gekennzeichnet, dass** eine sich von der Stirnseite fort erstreckende, in zwei Richtungen bewegliche Lippe (22) vorgesehen ist, deren Fuß sich in die Stirnseite erweitert und im Anschluss an den erweiterten Bereich in die beiden Betätigungsstege (40, 48) übergeht.

12. Profilleiste nach einem der Ansprüche 1 bis 11, **dadurch gekennzeichnet, dass** die Profilleiste an der Stirnseite außen seitlich jeweils eine Dichtlippe (14, 16) aufweist.

13. Profilleiste nach Anspruch 12, **dadurch gekennzeichnet, dass** die Dichtlippen (14, 16) von der Außenseite schräg nach vorne und innen abstehen.

14. Profilleiste nach einem der Ansprüche 11, 11 und 12 oder 13, **dadurch gekennzeichnet, dass** sich die bewegliche Lippe (22) von der Stirnseite der Profilleiste von dieser fort schräg in Richtung einer Außenseite der Profilleiste erstreckt und zumindest an dem dem vorderen Lippenende entgegengesetzten Ende eine Aussparung (30) in der Stirnseite
vorgesehen ist.

15. Profilleiste nach einem der Ansprüche 1 bis 14, **dadurch gekennzeichnet, dass** der elektrische Sensor mit minimalem Spiel eingebaut ist.

16. Profilleiste nach einem der Ansprüche 1 bis 15, **dadurch gekennzeichnet, dass** der elektrische Sensor ein Schaltelement ist.

17. Profilleiste nach einem der Ansprüche 1 bis 16, **dadurch gekennzeichnet, dass** die gummielastische Profilleiste mit mindestens einer luftdicht abgeschlossenen Hohlkammer ausgebildet ist, deren Volumen sich bei Druckbeaufschlagung von außen ändert, und an die ein Druckschalter angeschlossen ist, der eine sich aus der Volumenänderung ergebende Druckdifferenz in ein Ausgangssignal umwandelt.

## Claims

1. Profile strip for a vehicle door with anti-trap protection, comprising a rubber-elastic profile strip with a profile foot (2; 102; 202), two outer sides and an end face and with an electrical sensor which is disposed in a receiving space (12; 112; 212) in the profile strip, can be actuated by movements of the profile strip and has two actuation sides, wherein at least regions of the receiving space (12; 112; 212) of the electrical sensor have a flexible wall, one region of said wall lying opposite one of the two actuation sides of the electrical sensor, and two actuation webs are provided which can be brought into engagement with the flexible wall of the receiving space, **characterised in that** a flexible region of the flexible wall of the receiving space lies opposite a respective one of the actuation sides of the sensor, and a region inside the profile strip, which is located laterally in relation to the receiving space (12; 112; 212) of the electrical sensor and/or towards the end face and can be laterally deflected and/or deformed at least partially when pressure is exerted from the outside, includes two relatively rigid mutually spaced and moveable actuation webs (40, 48; 140, 148; 240, 248) which can be brought into actuating engagement with a respective actuation side of the electrical sensor.

2. Profile strip as claimed in claim 1, **characterised in that** the flexible wall of the receiving space (12; 112; 212) of the electrical sensor on a side preferably opposite the end face has at least one actuation rib (24; 124; 224) in line with the end (42; 142; 242) of the associated actuation web (40; 140; 240).

3. Profile strip as claimed in claim 1, **characterised in that** the flexible wall of the receiving space (12; 112; 212) of the electrical sensor on a side preferably facing the end face has at least one actuation rib (26, 126; 226) in line with the end of the associated actuation web (48; 148; 248).

4. Profile strip as claimed in claim 2 or 3, **characterised in that** an actuation web (48; 148; 248) has, at the end, an actuation projection (50; 150; 250) which is opposite the flexible wall of the receiving space (12; 112; 212) of the electrical sensor.

5. Profile strip as claimed in any one of claims 2 to 4, **characterised in that** the end of an actuation web (48; 148; 248) is slightly spaced apart from the flexible wall of the receiving space (12; 112; 212) of the electrical sensor.

6. Profile strip as claimed in claim 5, **characterised in that** between the end of the actuation web (48; 148; 248) and the flexible wall of the receiving space (12; 112; 212) of the electrical sensor a cavity (6; 106; 206) is provided in the profile strip.

7. Profile strip as claimed in any one of claims 2 to 6, **characterised in that** an actuation web (40; 140; 240) tapers towards an actuation end.

8. Profile strip as claimed in any one of claims 1 to 7, **characterised in that** at least one actuation web (40; 140; 240) forms a part of the wall of the receiving space (12; 112; 212) of the electrical sensor.

9. Profile strip as claimed in any one of claims 3 to 8, **characterised in that** an actuation web (40; 140; 240) merges into the wall of the receiving space (12; 112; 212) of the electrical sensor.

10. Profile strip as claimed in any one of claims 3 to 9, **characterised in that** an actuation web (40) extends along the end face of the profile strip and the other actuation web (48) is defined on the side opposite the electrical sensor by a cavity (6) in the profile strip.

11. Profile strip as claimed in any one of claims 1 to 10, **characterised in that** a lip (22) which extends away from the end face and moves in two directions is provided, the foot of which widens into the end face and merges into the two actuation webs (40, 48) adjoining the widened region.

12. Profile strip as claimed in any one of claims 1 to 11, **characterised in that** the profile strip has a respective sealing lip (14, 16) laterally on the outside of the end face.

13. Profile strip as claimed in claim 12, **characterised in that** the sealing lips (14, 16) protrude from the outside in an inclined manner forwards and inwards.

14. Profile strip as claimed in any one of claims 11, 11 and 12 or 13, **characterised in that** the moveable lip (22) extends away from the end face of the profile strip in an inclined manner in the direction of an outside of the profile strip and an aperture (30) is provided in the end strip at least at the end opposite the front lip end.

15. Profile strip as claimed in any one of claims 1 to 14, **characterised in that** the electrical sensor is installed with minimum play.

16. Profile strip as claimed in any one of claims 1 to 15, **characterised in that** the electrical sensor is a switching element.

17. Profile strip as claimed in any one of claims 1 to 16, **characterised in that** the rubber-elastic profile strip is formed with at least one hollow space which is closed in an air-tight manner, the volume of which changes when pressure is exerted from the outside, and to which a pressure switch is connected which converts a pressure difference resulting from a change in volume into an output signal.

## Revendications

1. Baguette profilée destinée à une portière de véhicule avec protection anti-coincement, comprenant une baguette profilée en caoutchouc élastique avec un pied profilé (2 ; 102 ; 202), deux faces externes ainsi qu'une façade et un capteur électrique doté de deux côtés d'actionnement, disposé dans un logement (12 ; 112 ; 212) de la baguette profilée et pouvant être actionné par les mouvements de la baguette profilée, le logement (12 ; 112 ; 212) du capteur électrique présentant une paroi flexible, tout au moins par zones, depuis laquelle une zone se situe à l'opposé de l'un des deux côtés d'actionnement du capteur électrique, et deux entretoises d'actionnement sont prévues, pouvant être amenées en engagement avec la paroi flexible du logement, **caractérisée en ce qu'**une zone flexible de la paroi flexible du logement se trouve à chaque fois à l'opposé de l'un des éléments d'actionnement du capteur et **en ce qu'**une zone déformable et/ou pouvant être défléchie latéralement, tout au moins en partie, en cas d'application de pression provenant de l'extérieur, positionnée latéralement et/ou orientée en direction de la façade par rapport au logement (12 ; 112 ; 212) du capteur électrique, comprend deux entretoises d'actionnement (40, 48 ; 140, 148 ; 240, 248) relativement rigides, mobiles et espacées l'une par rapport à l'autre, pouvant chacune être amenées en engagement par intervention d'un actionnement avec un côté d'actionnement du capteur électrique,

2. Baguette profilée selon la revendication 1, **caractérisée en ce que** la paroi flexible du logement (12 ; 112 ; 212) du capteur électrique présente sur un côté, de préférence sur le côté situé en face de la façade, au moins une nervure d'actionnement (24 ; 124 ; 224) à hauteur de l'extrémité (42 ; 142 ; 242) de l'entretoise d'actionnement associée (40 ; 140 ; 240).

3. Baguette profilée selon la revendication 1, **caractérisée en ce que** la paroi flexible du logement (12 ; 112 ; 212) du capteur électrique présente sur un des côtés, de préférence sur le côté faisant face à la façade, au moins une nervure d'actionnement (26, 126 ; 226) à hauteur de l'extrémité de l'entretoise d'actionnement associée (48 ; 148 ; 248).

4. Baguette profilée selon la revendication 2 ou 3, **caractérisée en ce qu'**une entretoise d'actionnement (48 ; 148 ; 248) présente en son extrémité une saillie d'actionnement (50 ; 150 ; 250), qui se trouve à l'opposé de la paroi flexible du logement (12 ; 112 ; 212) du capteur électrique.

5. Baguette profilée selon l'une des revendications 2 à 4, **caractérisée en ce que** l'extrémité d'une entretoise d'actionnement (48 ; 148 ; 248) présente une faible distance par rapport à la paroi flexible du logement (12 ; 112 ; 212) du capteur électrique.

6. Baguette profilée selon la revendication 5, **caractérisée en ce qu'**une cavité (6 ; 106 ; 206) de la baguette profilée est prévue entre l'extrémité de l'entretoise d'actionnement (48 ; 148 ; 248) et la paroi flexible du logement (12 ; 112 ; 212) du capteur électrique.

7. Baguette profilée selon l'une des revendications 2 à 6, **caractérisée en ce qu'**une entretoise d'actionnement (40 ; 140 ; 240) présente une forme rétrécie à une extrémité d'actionnement.

8. Baguette profilée selon l'une des revendications 1 à 7, **caractérisée en ce qu'**au moins une entretoise d'actionnement (40 ; 140 ; 240) forme une partie de la paroi du logement (12 ; 112 ; 212) du capteur électrique.

9. Baguette profilée selon l'une des revendications 3 à 8, **caractérisée en ce qu'**une entretoise d'actionnement (40 ; 140 ; 240) pénètre dans la paroi du logement (12 ; 112 ; 212) du capteur électrique.

10. Baguette profilée selon l'une des revendications 3 à 9, **caractérisée en ce qu'**une entretoise d'actionnement (40) s'étend le long de la façade de la baguette profilée et que l'autre entretoise d'actionnement (48) sur le côté à l'opposé du capteur électrique est limitée par une cavité (6) de la baguette profilée.

11. Baguette profilée selon l'une des revendications 1 à 10, **caractérisée en ce qu'**est prévue une lèvre mobile (22) dans les deux sens, s'étendant depuis la façade, et dont le pied s'élargit dans la façade et se convertit en les deux entretoises d'actionnement (40, 48) à la suite de la zone élargie.

12. Baguette profilée selon l'une des revendications 1 à 11, **caractérisée en ce que** la baguette profilée située en façade présente à l'extérieur une lèvre d'étanchéité (14, 16) de chaque côté.

13. Baguette profilée selon la revendication 12, **caractérisée en ce que** les lèvres d'étanchéité (14, 16) sont distantes de la face extérieure et inclinées vers l'avant et à l'intérieur.

14. Baguette profilée selon l'une des revendications 11, 11 et 12 ou 13, **caractérisée en ce que** se la lèvre mobile (22) s'étend depuis la façade de la baguette profilée inclinée depuis celle-ci en direction d'une face externe de la baguette profilée, et qu'une cavité (30) est prévue dans la façade, tout au moins au niveau de l'extrémité opposée à l'extrémité avant de la lèvre.

15. Baguette profilée selon l'une des revendications 1 à 14, **caractérisée en ce que** le capteur électrique est mis en place avec un jeu minimal.

16. Baguette profilée selon l'une des revendications 1 à 15, **caractérisée en ce que** le capteur électrique est un élément de commutation.

17. Baguette profilée selon l'une des revendications 1 à 16, **caractérisée en ce que** la baguette profilée en caoutchouc élastique est formée d'au moins un compartiment creux, fermé hermétiquement, dont le volume change en cas d'application d'une pression, et auquel est connecté un pressostat qui convertit en un signal de sortie toute différence de pression résultant du changement de volume.
